(19) **Europäisches Patentamt** / **European Patent Office** / **Office européen des brevets**

(11) **EP 4 768 508 A1**

(12) **EUROPEAN PATENT APPLICATION**
published in accordance with Art. 153(4) EPC

(43) Date of publication:
01.07.2026 Bulletin 2026/27

(21) Application number: 25768665.9

(22) Date of filing: 07.03.2025

(51) International Patent Classification (IPC):
$C08C\ 19/02^{(2006.01)}$    $C08L\ 15/00^{(2006.01)}$
$C08F\ 236/12^{(2006.01)}$    $C08F\ 2/24^{(2006.01)}$
$C01B\ 32/174^{(2017.01)}$    $C09C\ 1/56^{(2006.01)}$
$C08K\ 3/04^{(2006.01)}$    $H01M\ 4/62^{(2006.01)}$
$H01M\ 4/139^{(2010.01)}$    $H01M\ 10/0525^{(2010.01)}$

(52) Cooperative Patent Classification (CPC):
C01B 32/174; C08C 19/02; C08F 2/24;
C08F 236/12; C08K 3/04; C08L 15/00; C09C 1/56;
H01M 4/139; H01M 4/62; H01M 10/0525

(86) International application number:
PCT/KR2025/003054

(87) International publication number:
WO 2025/188109 (11.09.2025 Gazette 2025/37)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 07.03.2024 KR 20240032865
12.03.2024 KR 20240034630

(71) Applicant: **LG Chem, Ltd.**
**Yeongdeungpo-gu**
**Seoul 07336 (KR)**

(72) Inventors:
• **LEE, Se Eun**
**Daejeon 34122 (KR)**
• **KIM, Byoung Yun**
**Daejeon 34122 (KR)**
• **JO, In Sung**
**Daejeon 34122 (KR)**
• **LEE, Jae Min**
**Daejeon 34122 (KR)**
• **CHOI, Woo Seok**
**Daejeon 34122 (KR)**

(74) Representative: **Vossius & Partner**
**Patentanwälte Rechtsanwälte mbB**
**Siebertstraße 3**
**81675 München (DE)**

(54) **HYDROGENATED NITRILE-BASED LATEX, MANUFACTURING METHOD THEREFOR, AND CARBON MATERIAL DISPERSION LIQUID**

(57) The present invention relates to a hydrogenated nitrile-based latex having low residual inorganic matter content and low molecular weight characteristics, a method for manufacturing the same, and a carbon material dispersion including the same, and provides a hydrogenated nitrile-based latex including a hydrogenated nitrile-based copolymer satisfying Equation (1): Ru+Pd+Rh < 60 ppm and Equation (2): Ca+Mg+Al < 200 ppm, having a solvent displacement viscosity of 10 cps or more and 150 cps or less, and a weight average molecular weight of 10,000 g/mol or more and less than 80,000 g/mol, a method for manufacturing the same, and a carbon material dispersion.

**EP 4 768 508 A1**

**Description**

## TECHNICAL FIELD

### Cross-reference to Related Applications

This application claims the benefit of Korean Patent Application Nos. 10-2024-0032865 filed on March 7, 2024 and 10-2024-0034630 filed on March 12, 2024, in the Korean Intellectual Property Office, the disclosure of which is incorporated herein in its entirety by reference.

### Technical Field

The present invention relates to a hydrogenated nitrile-based latex having low residual inorganic matter content, low viscosity, and low molecular weight characteristics, a method for manufacturing the same, and a carbon material dispersion.

## BACKGROUND ART

In general, nitrile-based rubber indicates a polymer prepared by copolymerizing an ethylenically unsaturated nitrile-based monomer, such as acrylonitrile, and a conjugated diene-based monomer, such as 1,3-butadiene, and hydrogenated nitrile-based rubber, which is manufactured through the hydrogenation reaction of nitrile-based rubber, is widely used in various applications including timing belts, seals, hoses, diaphragms, and rolls, as a special rubber exhibiting excellent heat resistance, ozone resistance, chemical resistance, and oil resistance.

The commercially available hydrogenated nitrile-based rubber is presently manufactured by a process in which nitrile-based rubber is dissolved in a solvent, subjected to a reaction with gaseous hydrogen at high temperature and high pressure in the presence of a precious metal catalyst to hydrogenate double bonds in the nitrile-based rubber, and then removing the used catalyst and the solvent. This process is rather complex and costly due to the use of high-pressure reactors and precious metal catalysts, along with environmental concerns arising from solvent use and the limitation of using rubber solely in bulk.

In addition, in the process using a precious metal catalyst, attempts were made to use as little of the expensive catalyst as possible due to the high cost of the catalyst. However, using the catalyst in a small amount leads to reduced hydrogenation rate and increased molecular weight of a prepared hydrogenated nitrile-based rubber, which reduces dispersibility and increases viscosity, while using the catalyst in a large amount leads to a large amount of residual metal in a final hydrogenated nitrile-based rubber, which increases viscosity due to the residual metal and requires high costs for removing the residual metal.

An alternative approach is to hydrogenate nitrile-based rubber using diimide in the latex form, which provides benefits not only in terms of safety but also in economic and environmental aspects compared to the typical process that involves the reaction in a high-pressure reactor using hydrogen, a solvent, and an expensive precious metal catalyst. Despite these multiple benefits, however, commercialization has not been achieved due to the gel formed by side reactions occurring during hydrogenation. In addition, crosslinking takes place in the aggregation, drying, and storage stages during and after the hydrogenation, negatively affecting the properties of a final hydrogenated nitrile-based latex.

Accordingly, there is a need for a hydrogenated nitrile-based latex having low molecular weight, high degree of hydrogenation, and low residual metal content, and a method for manufacturing the same.

[Related Art Document]

[Patent Document]

(Patent Document 1) KR 10-2021-0035088 A (2021. 03. 31.)

## DISCLOSURE OF THE INVENTION

### TECHNICAL PROBLEM

An aspect of the present invention provides a hydrogenated nitrile-based latex including a hydrogenated nitrile-based copolymer having low residual metal content and low viscosity characteristics.

Another aspect of the present invention provides a method for manufacturing the hydrogenated nitrile-based latex.

In addition, another aspect of the present invention provides a carbon material dispersion including the hydrogenated nitrile-based copolymer.

## TECHNICAL SOLUTION

To address the above-described tasks, the present invention provides a hydrogenated nitrile-based latex, a method for manufacturing the same, and a carbon material dispersion.

(1) According to an aspect of the present invention, there is provided a hydrogenated nitrile-based latex including a hydrogenated nitrile-based copolymer satisfying Equation (1) and Equation (2) below, having a solvent displacement viscosity of 10 cps or more and 150 cps or less, and a weight average molecular weight of 10,000 g/mol or more and less than 80,000 g/mol, wherein the solvent displacement viscosity is measured using a Brookfield viscometer (#63 spin, 25°C) for a solution in which the hydrogenated nitrile-based copolymer is dissolved at 16 wt% in an amide-based dispersion medium,

$$\text{Equation (1): } Ru+Pd+Rh < 60 \text{ ppm}$$

$$\text{Equation (2): } Ca+Mg+Al < 200 \text{ ppm}$$

in Equation (1) and Equation (2) above,
Ru, Pd, Rh, Ca, Mg, and Al are each the content of each metal ion in the hydrogenated nitrile-based copolymer, as measured by ICP-OES (RF power 1300 W, plasma gas flow: 15 l/min).

(2) The present invention provides the hydrogenated nitrile-based latex according to (1) above, wherein in Equation (1) above, Ru+Pd+Rh is less than 50 ppm, and in Equation (2) above, Ca+Mg+Al is less than 200 ppm.
(3) The present invention provides the hydrogenated nitrile-based latex according to (1) or (2) above, wherein in Equation (1) above, Ru+Pd+Rh is less than 50 ppm, and in Equation (2) above, Ca+Mg+Al is less than 100 ppm.
(4) The present invention provides the hydrogenated nitrile-based latex according to any one of (1) to (3) above, wherein the hydrogenated nitrile-based copolymer has a viscosity of 10 cps or more and 100 cps or less.
(5) The present invention provides the hydrogenated nitrile-based latex according to any one of (1) to (4) above, wherein the hydrogenated nitrile-based copolymer has a weight average molecular weight of 15,000 g/mol or more and 55,000 g/mol or less.
(6) The present invention provides the hydrogenated nitrile-based latex according to any one of (1) to (5) above, wherein the hydrogenated nitrile-based copolymer has a hydrogenation degree of 60% or more.
(7) The present invention provides the hydrogenated nitrile-based latex according to any one of (1) to (6) above, wherein the hydrogenated nitrile-based copolymer includes an ethylenically unsaturated nitrile-based monomer unit, and a hydrogenated conjugated diene-based monomer unit.
(8) The present invention provides the hydrogenated nitrile-based latex according to (7) above, wherein a weight ratio of the ethylenically unsaturated nitrile-based monomer unit and the hydrogenated conjugated diene-based monomer unit is 1:99 to 50:50.
(9) The present invention provides the hydrogenated nitrile-based latex according to (7) or (8) above, wherein the hydrogenated nitrile-based copolymer further includes a conjugated diene-based monomer unit.
(10) According to another aspect of the present invention, there is provided a method for manufacturing a hydrogenated nitrile-based latex according to any one of (1) to (10) above including a hydrogenated nitrile-based copolymer, the method including polymerizing a monomer mixture including a conjugated diene-based monomer and an ethylenically unsaturated nitrile-based monomer in the presence of an emulsifier to prepare a nitrile-based copolymer (S1); hydrogenating the nitrile-based copolymer to prepare a hydrogenated nitrile-based copolymer (S2); and subjecting the hydrogenated nitrile-based copolymer to an ozonolysis reaction (S3), wherein step (S3) is performed by bubbling a mixture of air and ozone into the hydrogenated nitrile-based copolymer, and the mixture of air and ozone comprises 0.1 mol or more and less than 0.5 mol of ozone.
(11) The present invention provides the method according to (10) above, wherein the hydrogenating in step (S2) is performed in the presence of an oxidizing agent and a reducing agent.
(12) The present invention provides the method according to (10) or (11) above, wherein the ozonolysis reaction in step (S3) is performed at a temperature ranging from 0°C to 75°C.

(13) According to another aspect of the present invention, there is provided a carbon material dispersion including a carbon material, a dispersion medium, and a hydrogenated nitrile-based copolymer, wherein the hydrogenated nitrile-based copolymer satisfies Equation (1) and Equation (2) below, has a solvent displacement viscosity of 10 cps or more and 150 cps or less, and a weight average molecular weight of 10,000 g/mol or more and less than 80,000 g/mol, and the solvent displacement viscosity is measured using a Brookfield viscometer (#63 spin, 25°C) for a solution in which the hydrogenated nitrile-based copolymer is dissolved at 16 wt% in an amide-based dispersion medium,

$$\text{Equation (1): } Ru+Pd+Rh < 60 \text{ ppm}$$

$$\text{Equation (2): } Ca+Mg+Al < 200 \text{ ppm}$$

in Equation (1) and Equation (2) above,
Ru, Pd, Rh, Ca, Mg, and Al are each the content of each metal ion in the hydrogenated nitrile-based copolymer, as measured by ICP-OES (RF power 1300 W, plasma gas flow: 15 l/min).

(14) The present invention provides the carbon material dispersion according to (13) above, wherein the carbon material dispersion has a viscosity of 1,000 cps or more and less than 15,000 cps.
(15) The present invention provides the carbon material dispersion according to (13) or (14) above, wherein the carbon material is at least one selected from the group consisting of carbon black, Ketjen black, fullerene, graphene, carbon nanotube, carbon black, and graphite.

## ADVANTAGEOUS EFFECTS

A hydrogenated nitrile-based latex according to the present invention has low residual inorganic matter content and further has low viscosity, thereby exhibiting excellent dispersibility.
A method for manufacturing a hydrogenated nitrile-based latex according to the present invention enables manufacturing a low molecular weight and low viscosity hydrogenated nitrile-based latex having extremely low residual metal content and excellent hydrogenation degree by performing hydrogenation in the absence of a precious metal catalyst and performing an ozonolysis reaction with controlled ozone content.
A carbon material dispersion according to the present invention includes a hydrogenated nitrile-based copolymer having low molecular weight, low viscosity, and extremely low metal residual content, and thus may have excellent dispersibility.

## MODE FOR CARRYING OUT THE INVENTION

Hereinafter, the present invention will be described in detail to aid in understanding of the present invention.
It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Definition of Terms

The term 'latex' as used herein may indicate that a polymer or a copolymer polymerized by polymerization is present in a form dispersed in water or a solvent, and as a specific example, may indicate that fine particles of a rubber-like polymer or fine particles of a rubber-like copolymer polymerized by a polymer are present in a colloidal state in which the fine particles are dispersed in a solvent, and may also be referred to as 'emulsion'.

Measurement Methods

Herein, the content of residual metal ions in a hydrogenated nitrile-based copolymer was measured using an ICP-OES device with an RF power of 1300 W and a plasma gas flow rate of 15 l/min. The detection limit was 60 ppm, and a residual metal ion content of less than 60 ppm may be interpreted as the absence of residual metal ions. In this case, ICP-OES measurement samples were prepared by drying a hydrogenated nitrile-based copolymer latex in a vacuum oven at 60°C for 24 hours to obtain a hydrogenated nitrile-based copolymer in the latex. Then, 0.1 g of the hydrogenated nitrile-based copolymer was diluted in 15 ml of hydrofluoric acid, heat-treated by raising the temperature from room temperature (23±5°C) to 250°C for 90 minutes, and then maintained for 60 minutes.

Herein, the solvent displacement viscosity of a hydrogenated nitrile-based copolymer is measured using a Brookfield viscometer (#63 spindle, 25°C) with a dispersion solution containing 16 wt% of a hydrogenated nitrile-based copolymer as a sample, and the dispersion solution is a mixture of a hydrogenated nitrile-based copolymer and an amide-based dispersion medium, where the amide-based dispersion medium may be at least any one selected from the group consisting of dimethylformamide, diethylformamide, dimethylacetamide, and N-methylpyrrolidone.

Herein, weight average molecular weight was measured using Gel permeation chromatography (Waters PL-GPC220) with a Polymer Lavoratories PLgel MIX-B 300 mm column under the following conditions.

Measurement temperature: 40°C
Flow rate: 0.3 ml/min
Injection volume: 20 $\mu$l
Standard sample: Polystyrene

Herein, the hydrogenation degree was determined by dissolving 10 mg of a hydrogenated nitrile-based copolymer before and after hydrogenation in $CDCl_3$ to prepare a sample having a concentration of 25 mg/1 ml, and then measuring the sample through $^1$H NMR using a 500 MHz NMR (Varian), and calculation was based on a ratio of peak integral values of 1,2-bond amount (4.8 ppm to 5.1 ppm) and 1,4-bond amount (5.2 ppm to 5.5 ppm) of butadiene before and after hydrogenation.

Hydrogenated nitrile-based copolymer

The present invention provides a hydrogenated nitrile-based latex including a hydrogenated nitrile-based copolymer having low residual metal content, low molecular weight, and low viscosity.

The hydrogenated nitrile-based latex according to the present invention includes a hydrogenated nitrile-based copolymer satisfying Equation (1) and Equation (2) below, having a solvent displacement viscosity of 10 cps or more and 150 cps or less, and a weight average molecular weight of 10,000 g/mol or more and less than 80,000 g/mol, where the solvent displacement viscosity is measured using a Brookfield viscometer (#63 spin, 25°C) for a solution in which the hydrogenated nitrile-based copolymer is dissolved at 16 wt% in an amide-based dispersion medium.

$$\text{Equation (1): } Ru+Pd+Rh < 60 \text{ ppm}$$

$$\text{Equation (2): } Ca+Mg+Al < 200 \text{ ppm}$$

In Equation (1) and Equation (2) above,
Ru, Pd, Rh, Ca, Mg, and Al are each the content of each metal ion in the hydrogenated nitrile-based copolymer, as measured by ICP-OES (RF power 1300 W, plasma gas flow: 15 l/min).

In addition, Ru+Pd+Rh in Equation (1) according to the present invention may be less than 60 ppm, less than 55 ppm, less than 50 ppm, less than 45 ppm, less than 40 ppm, less than 35 ppm, less than 30 ppm, less than 25 ppm, or less than 20 ppm.

In addition, Ca+Mg+Al in Equation (2) according to the present invention may be less than 200 ppm, less than 180 ppm, less than 150 ppm, less than 110 ppm, less than 100 ppm, less than 90 ppm, less than 80 ppm, less than 70 ppm, less than 60 ppm, less than 50 ppm, less than 40 ppm, less than 30 ppm, less than 20 ppm, less than 10 ppm, or less than 5 ppm.

In addition, according to the present invention, the hydrogenated nitrile-based copolymer has a solvent displacement viscosity of 10 cps or more and 150 cps or less, and the solvent displacement viscosity is measured using a Brookfield viscometer (#63 spin, 25°C) for a solution in which the hydrogenated nitrile-based copolymer is dissolved at 16 wt% in an amide-based dispersion medium.

In addition, the hydrogenated nitrile-based copolymer according to the present invention may have a solvent displacement viscosity of 150 cps or less, 140 cps or less, 130 cps or less, 120 cps or less, 110 cps or less, or 100 cps or less, and may have a solvent displacement viscosity of 10 cps or more, 15 cps or more, 20 cps or more, or 30 cps or more.

In addition, the hydrogenated nitrile-based copolymer according to the present invention may have a solvent displacement viscosity of 10 cps or more and 100 cps or less, 20 cps or more and 150 cps or less, or 30 cps or more and 100 cps or less.

The hydrogenated nitrile-based copolymer according to the present invention has the solvent displacement viscosity described above, and thus, when the hydrogenated nitrile-based copolymer is included in a carbon material dispersion, carbon material aggregation is easily inhibited, resulting in low dispersion viscosity, and this may contribute to improving the dispersibility of the carbon material dispersion.

In addition, the hydrogenated nitrile-based copolymer according to the present invention may have a weight average molecular weight of 10,000 g/mol or more and less than 80,000 g/mol, 15,000 g/mol or more and 75,000 g/mol or less, 15,000 g/mol or more and 70,000 g/mol or less, 15,000 g/mol or more and 65,000 g/mol or less, 15,000 g/mol or more and 60,000 g/mol or less, or 15,000 g/mol or more and 55,000 g/mol or less.

In addition, the hydrogenated nitrile-based copolymer according to the present invention may have a hydrogenation degree of 60% or more.

In general, hydrogenated nitrile-based copolymers are prepared through the hydrogenation reaction of nitrile-based copolymers, and commercially available hydrogenated nitrile-based copolymers are presently prepared by a process in which nitrile-based rubber is dissolved in a solvent, and subjected to a reaction with gaseous hydrogen at high temperature and high pressure in the presence of a precious metal catalyst to hydrogenate double bonds in the nitrile-based copolymers, and then the used catalyst and the solvent are removed, and this induces high costs due to the use of a high-pressure reactor and a precious metal catalyst. To reduce costs, using the precious metal catalyst in a small amount leads to reduced hydrogenation rate and increased molecular weight of the resulting hydrogenated nitrile-based copolymer, which reduces dispersibility and increases viscosity, and using the precious metal catalyst in an appropriate amount or a large amount leads to a large amount of residual metal in the hydrogenated nitrile-based copolymer, which increases viscosity due to the residual metal and requires high costs for removing the residual metal. In addition, the preparation of commercially available hydrogenated nitrile-based copolymers presently involves adding a coagulant (flocculant, $AlSO_4$, $MgSO_4$, $CaCl_2$) to a polymer latex obtained by copolymerizing an ethylenically unsaturated nitrile-based monomer and a conjugated diene-based monomer (emulsion polymerization) to coagulate the latex into a nitrile-based copolymer, which is then redissolved in a solvent to prepare a nitrile-based copolymer solution for hydrogenation. Consequently, metal components (Ca, Mg, Al) originating from the coagulant may remain in the hydrogenated nitrile-based copolymer, causing an increase in viscosity.

However, the hydrogenated nitrile-based copolymer according to the present invention is hydrogenated directly from a polymer latex obtained by copolymerizing an ethylenically unsaturated nitrile-based monomer and a conjugated diene-based monomer (emulsion polymerization), and thus metal components originating from a coagulant do not remain, resulting in an extremely small amount of residual metals in the rubber, as defined in Equation (1) and Equation (2). In addition, the hydrogenated nitrile-based copolymer has the solvent displacement viscosity and weight average molecular weight described above, exhibiting excellent dispersibility, and offers benefits of eliminating high cost expenditures.

In addition, the hydrogenated nitrile-based copolymer is prepared by hydrogenating C=C double bonds within a conjugated diene-based monomer unit of a nitrile-based rubber prepared by copolymerizing an ethylenically unsaturated nitrile-based monomer and a conjugated diene-based monomer and consequently including an ethylenically unsaturated nitrile-based monomer unit and a conjugated diene-based monomer unit. Accordingly, the hydrogenated nitrile-based copolymer according to the present invention may include an ethylenically unsaturated nitrile-based monomer unit and a hydrogenated conjugated diene-based monomer unit, and may further include a conjugated diene-based monomer unit.

In addition, a weight ratio of the ethylenically unsaturated nitrile-based monomer unit and the hydrogenated conjugated diene-based monomer unit may be 1:99 to 50:50.

The ethylenically unsaturated nitrile-based monomer forming the ethylenically unsaturated nitrile-based monomer unit may be at least any one selected from the group consisting of acrylonitrile, methacrylonitrile, fumaronitrile, $\alpha$-chloronitrile, and $\alpha$-cyano ethyl acrylonitrile. As a specific example, the ethylenically unsaturated nitrile-based monomer may be acrylonitrile or methacrylonitrile, and more specifically, may be acrylonitrile.

The conjugated diene-based monomer forming the hydrogenated conjugated diene-based monomer unit and the conjugated diene-based monomer unit may be at least any one selected from the group consisting of 1,3-butadiene, 2,3-dimethyl-1,3-butadiene, 2-ethyl-1,3-butadiene, 1,3-pentadiene, and isoprene. As a specific example, the conjugated diene-based monomer may be 1,3-butadiene.

In addition, according to the present invention, the hydrogenated nitrile-based copolymer may further include at least any one of an ethylenically unsaturated acid monomer unit or an ethylenically unsaturated monomer unit, as needed.

The ethylenically unsaturated acid monomer forming the ethylenically unsaturated acid monomer unit may be an ethylenically unsaturated monomer containing an acidic group such as a carboxyl group, a sulfonic acid group, or an acid anhydride group. As a specific example, the ethylenically unsaturated acid monomer may include at least one selected from the group consisting of an ethylenically unsaturated acid monomer such as acrylic acid, methacrylic acid, itaconic acid, maleic acid, and fumaric acid; a polycarboxylic anhydride such as maleic anhydride and citraconic anhydride; an ethylenically unsaturated sulfonic acid monomer such as styrene sulfonic acid; and an ethylenically unsaturated polycarboxylic acid partial ester monomer such as monobutyl fumarate, monobutyl maleate, and mono-2-hydroxypropyl maleate. As a more specific example, the ethylenically unsaturated acid monomer may be at least one selected from the group consisting of acrylic acid, methacrylic acid, itaconic acid, maleic acid, and fumaric acid, and as a more specific example, may be methacrylic acid. The ethylenically unsaturated acid monomer may also be used in the form of a salt such as an alkali metal salt or an ammonium salt, upon polymerization. The content of the ethylenically unsaturated acid monomer unit may be 1 wt% to 5 wt% with respect to the total content of the hydrogenated nitrile-based copolymer.

In addition, the ethylenically unsaturated monomer forming the ethylenically unsaturated monomer unit may include at least one selected from the group consisting of a hydroxyalkyl (meth)acrylate monomer having 1 to 4 carbon atoms; a vinyl aromatic monomer selected from the group consisting of styrene, aryl styrene, and vinyl naphthalene; a fluoroalkyl vinyl ether monomer such as fluoroethyl vinyl ether; an ethylenically unsaturated amide monomer selected from the group consisting of (meth)acrylamide, N-methylol (meth)acrylamide, N,N-dimethylol (meth)acrylamide, N-methoxy methyl (meth)acrylamide, and N-propoxy methyl (meth)acrylamide; a non-conjugated diene monomer such as vinyl pyridine, vinyl norbornene, dicyclopentadiene, and 1,4-hexadiene; and an ethylenically unsaturated carboxylic acid ester monomer selected from the group consisting of (meth)acrylic acid methyl, (meth)acrylic acid ethyl, (meth)acrylic acid butyl, (meth)acrylic acid-2-ethylhexyl, (meth)acrylic acid trifluoroethyl, (meth)acrylic acid tetrafluoropropyl, dibutyl maleate, dibutyl fumarate, diethyl maleate, (meth)acrylic acid methoxymethyl, (meth)acrylic acid ethoxyethyl, (meth)acrylic acid methoxyethoxyethyl, (meth)acrylic acid cyanomethyl, (meth)acrylic acid 2-cyanoethyl, (meth)acrylic acid 1-cyanopropyl, (meth)acrylic acid 2-ethyl-6-cyanohexyl, (meth)acrylic acid 3-cyanopropyl, (meth)acrylic acid hydroxyethyl, (meth)acrylic acid hydroxypropyl, glycidyl (meth)acrylate, and dimethylami1noethyl (meth)acrylate. The content of the ethylenically unsaturated monomer unit may be 0.5 wt% to 5 wt% with respect to the total content of the hydrogenated nitrile-based copolymer.

The hydrogenated nitrile-based copolymer latex according to the present invention may have a solid content of 10 wt% to 30 wt%.

The hydrogenated nitrile-based latex according to the present invention is applicable to a wide range of applications such as timing belts, seals, hoses, diaphragms, rolls, dispersants, and electrode active material slurry compositions.

Method for manufacturing hydrogenated nitrile-based latex

The present invention provides a method for manufacturing a hydrogenated nitrile-based latex having low viscosity, low molecular weight, and extremely low metal residual content in the absence of a precious metal catalyst.

The method for manufacturing a hydrogenated nitrile-based latex may include polymerizing a monomer mixture including a conjugated diene-based monomer and an ethylenically unsaturated nitrile-based monomer in the presence of an emulsifier to prepare a nitrile-based copolymer (S1); hydrogenating the nitrile-based copolymer to prepare a hydrogenated nitrile-based copolymer (S2); subjecting the hydrogenated nitrile-based copolymer to an ozonolysis reaction (S3), where step (S3) may be performed by bubbling a mixture of air and ozone into the hydrogenated nitrile-based copolymer, and the mixture of air and ozone may include 0.1 mol or more and less than 0.5 mol of ozone.

In this case, monomers used in the preparation of the nitrile-based copolymer are as described above.

Hereinafter, the method for manufacturing a hydrogenated nitrile-based latex according to the present invention will be described in more detail, broken down into steps.

*Step (S1)*

Step (S1) is a step for copolymerizing a conjugated diene-based monomer and an ethylenically unsaturated nitrile-based monomer to prepare a nitrile-based copolymer, and may be performed by polymerizing a monomer mixture including a conjugated diene-based monomer and an ethylenically unsaturated nitrile-based monomer in the presence of an emulsifier.

In this case, the polymerization may be performed through typical emulsion polymerization, and the emulsifier may be at least one fatty acid salt selected from the group consisting of oleic acid, rosin acid, lauric acid, myristic acid, palmitic acid, stearic acid, naphthalene sulfonic acid, and eicosanoic acid; at least one sulfonate-based emulsifier selected from the group consisting of a sulfosuccinate-based emulsifier, a disulfonate-based emulsifier, and a linear alkylbenzene sulfonate-based emulsifier, and a mixture thereof.

In addition, the polymerization may be performed by further using additives such as a polymerization initiator and a molecular weight regulator, and as the polymerization initiator, at least one selected from the group consisting of inorganic peroxides such as sodium persulfate, potassium persulfate, ammonium persulfate, potassium perphosphate, and hydrogen peroxide; organic peroxides such as t-butyl peroxide, cumene hydroperoxide, p-menthane hydroperoxide, di-t-butyl peroxide, t-butylcumyl peroxide, acetyl peroxide, isobutyl peroxide, octanoyl peroxide, dibenzoyl peroxide, 3,5,5-trimethylhexanol peroxide, and t-butyl peroxy isobutyrate; and azobis-based compounds such as azobisisobutyronitrile, azobis-2,4-dimethylvaleronitrile, azobiscyclohexanecarbonitrile, and azobisisobutyric acid (butyric acid)methyl may be used.

In addition, as the molecular weight regulator, at least one selected from the group consisting of n-octyl mercaptan, n-dodecyl mercaptan, n-decyl mercaptan, t-dodecyl mercaptan, 2,2,4,6,6-pentamethylheptane-4-thiol, and 2,2,4,6,6,8,8-heptamethylnonane-4-thiol may be used.

In addition, upon the polymerization, additives such as an activator, a chelating agent, a dispersing agent, a pH regulator, a deoxidizing agent, a particle size regulator, an anti-aging agent, and an oxygen scavenging agent may be used within a range that does not degrade the physical properties of rubber, as needed.

In addition, the polymerization may be performed at a temperature ranging from 10°C to 90°C or at a temperature ranging from 10°C to 75°C.

In addition, after initiating the polymerization, a polymerization terminator may be added to terminate the polymerization, and in this case, the polymerization terminator may be one commonly used in the art, and may include, for example, hydroxylamine, N,N-diethyl hydroxylamine, hydroxy amine sulfate, diethyl hydroxy amine, hydroxy amine sulfonic acid and an alkali metal ion thereof, sodium dimethyl dithio carbamate, a hydroquinone derivative, an aromatic hydroxy dithio carboxylic acid such as hydroxy diethyl benzene dithio carboxylic acid and hydroxy dibutyl benzene dithio carboxylic acid, and the like.

In addition, after the polymerization, a nitrile-based copolymer may be obtained in the form of latex, or a typical post-treatment process may be performed, and for example, at least any one post-treatment process selected from coagulation, solvent removal or precipitation, and drying may be performed to obtain a nitrile-based copolymer.

In this case, the latex refers to a dispersion (emulsion) in which polymer particles are dispersed in a liquid phase.

*Step (S2)*

Step (S2) is a step for hydrogenating the prepared nitrile-based copolymer to manufacture a hydrogenated nitrile-based copolymer, and the hydrogenating may be performed in the presence of an oxidizing agent and a reducing agent.

The oxidizing agent may be at least one selected from the group consisting of oxygen and peroxide, the peroxide may be hydrogen peroxide, and the oxidizing agent may be present in an amount of 1 to 100 parts by weight, 5 to 80 parts by weight, 10 to 70 parts by weight, 15 to 50 parts by weight, or 20 to 40 parts by weight, with respect to 100 parts by weight of the nitrile-based copolymer.

In addition, the reducing agent may be at least one selected from the group consisting of hydrazine and hydrazine hydrate, and may be present in an amount of 1 to 100 parts by weight, 1 to 50 parts by weight, 2 to 40 parts by weight, 3 to 30 parts by weight, or 5 to 20 parts by weight, with respect to 100 parts by weight of the nitrile-based copolymer.

In addition, the hydrogenation reaction may be performed at a temperature ranging from 30°C to 90°C or at a temperature ranging from 40°C to 70°C, and may be performed for 6 hours to 20 hours or 8 hours to 16 hours.

*Step (S3)*

Step (S3) is a step for manufacturing a hydrogenated nitrile-based latex from the prepared hydrogenated nitrile-based copolymer, and may be performed by subjecting the hydrogenated nitrile-based copolymer to an ozonolysis reaction.

The ozonolysis reaction may be performed by bubbling a mixture of air and ozone into a hydrogenated nitrile-based copolymer to remove any remaining reducing agent and split polymer chains to lower molecular weight, and in this case, the mixture of air and ozone may include 0.1 mol or more and less than 0.5 mol or 0.1 mol to 0.3 mol of ozone.

In addition, the ozonolysis reaction may be performed at a temperature ranging from 0°C to 75°C.

<u>Carbon material dispersion</u>

The present invention provides a carbon material dispersion having excellent dispersibility.

The carbon material dispersion according to the present invention may include a carbon material, a dispersion medium, and a hydrogenated nitrile-based copolymer, where the hydrogenated nitrile-based copolymer may satisfy Equation (1) and Equation (2) below, and have a solvent displacement viscosity of 10 cps or more and 150 cps or less and a weight average molecular weight of 10,000 g/mol or more and less than 80,000 g/mol, and the solvent displacement viscosity may be measured using a Brookfield viscometer (#63 spin, 25°C) for a solution in which the hydrogenated nitrile-based copolymer is dissolved at 16 wt% in an amide-based dispersion medium.

$$\text{Equation (1): } Ru+Pd+Rh < 60 \text{ ppm}$$

$$\text{Equation (2): } Ca+Mg+Al < 200 \text{ ppm}$$

In Equation (1) and Equation (2) above,
Ru, Pd, Rh, Ca, Mg, and Al are each the content of each metal ion in the hydrogenated nitrile-based copolymer, as measured by ICP-OES (RF power 1300 W, plasma gas flow: 15 l/min).

Specific descriptions of the hydrogenated nitrile-based copolymer in the carbon material dispersion are as described above.

In addition, the carbon material dispersion according to the present invention may have a viscosity of 1,000 cps or more and less than 15,000 cps, 2,000 cps or more and 10,000 cps or less, or 2,000 cps or more 5,000 cps or less, and in this case, the carbon material may not aggregate with each other and may have excellent dispersibility.

In addition, the carbon material according to the present invention may be at least one selected from the group consisting of carbon black, Ketjen black, fullerene, graphene, carbon nanotube, carbon black, and graphite. The above carbon material may be included in an amount of 1 wt% or more and 10 wt% or less, 2 wt% or more and 8 wt% or less, or 3 wt% or more and 7 wt% or less in the carbon material dispersion. In this case, a carbon material dispersion including the carbon material has excellent dispersibility, and thus may exhibit excellent processability and conductivity, inducing excellent battery performance.

In addition, the hydrogenated nitrile-based copolymer may be included in an amount of 0.2 wt% or more and 4.0 wt% or less, 0.4 wt% or more 3.2 wt% or less, or 0.6 wt% or more 2.8 wt% or less in the carbon material dispersion. In this case, a carbon material dispersion including the hydrogenated nitrile-based copolymer has excellent dispersibility, and thus may exhibit excellent processability and conductivity, inducing excellent battery performance.

In addition, the dispersion medium may be a solvent generally used in the art, and for example, N-methyl-2-pyrrolidone, dimethyl sulfoxide, isopropyl alcohol, acetone, or water may be used alone or in combination. In this case, an amount of dispersion medium used may be appropriately adjusted considering the viscosity of the carbon material dispersion.

Meanwhile, the carbon material dispersion according to the present invention may be prepared by mixing a carbon material, a hydrogenated nitrile-based copolymer, and a dispersion medium, and in this case, the mixing may be performed under a temperature condition in which physical properties do not change. For example, the mixing may be performed at a temperature of 50°C or less, or 5°C or more and 50°C or less.

The mixing may be performed through a typical mixing means without particular limitation as long as the carbon material and the hydrogenated nitrile-based copolymer in the carbon material dispersion are evenly dispersed, and may be performed through a method such as a ball mill, a bead mill, a disc mill, a basket mill, or a high pressure homogenizer.

Meanwhile, the carbon material dispersion according to the present invention may be used in an electrode active material slurry composition.

## Example

Hereinafter, the present invention will be described in more detail with reference to Examples. However, the following Examples are for illustrative purposes only to describe the present invention and are not intended to limit the scope of the present invention.

### Example 1

450 g of a nitrile copolymer (NBR6240, AN 34 wt%, MV 41, LG CHEM) was placed in a 3 L reactor, and 48 g of hydrazine and 130 g of hydrogen peroxide were added and subjected to a hydrogenation reaction at 40°C for 16 hours. Thereafter, an air/ozone mixture including 0.2 mol of ozone was bubbled into a hydrogenated nitrile-based rubber latex using a glass tube to perform an ozonolysis reaction, thereby manufacturing a hydrogenated nitrile-based latex (solid content: 21 wt%) including a hydrogenated nitrile-based copolymer.

### Example 2

With respect to Example 1, except that the ozonolysis reaction was performed using an air/ozone mixture including 0.1 mol of ozone, a hydrogenated nitrile-based latex (solid content: 21 wt%) was manufactured in the same manner as in Example 1.

### Example 3

With respect to Example 1, except that the ozonolysis reaction was performed using an air/ozone mixture including 0.3 mol of ozone, a hydrogenated nitrile-based latex (solid content: 21 wt%) was manufactured in the same manner as in Example 1.

**Example 4**

With respect to Example 1, except that the hydrogenation reaction was performed at 43°C and the ozonolysis reaction was performed using an air/ozone mixture including 0.1 mol of ozone, a hydrogenated nitrile-based latex (solid content: 21 wt%) was manufactured in the same manner as in Example 1.

**Comparative Example 1**

A polymer including 34 wt% acrylonitrile and 66 wt% 1,3-butadiene in 270 g of chlorobenzene was introduced into a high-pressure reactor. The reactor was degassed three times with pure $H_2$ (100-200 psi) under sufficient stirring, the reactor temperature was raised to 130°C, and a solution of 3.9 g (0.076 phr) of a tris(triphenylphosphine)-rhodium(I) chloride catalyst and 0.232 g of triphenylphosphine (TPP) as a cocatalyst in 60 ml of monochlorobenzene having an oxygen content of less than 5 ppm was introduced into the reactor under hydrogen and subjected to a hydrogenation reaction to manufacture a hydrogenated nitrile-based latex (solid content: 21 wt%) including a hydrogenated nitrile-based copolymer. The hydrogenation reaction was performed by raising the reactor temperature to 138°C and setting the pressure to 1200 psi (83 atm), and the temperature and hydrogen pressure inside the reactor were kept constant throughout the entire reaction.

**Comparative Example 2**

400 ml (48 g of total solids) of a latex solution, in which ion exchange water was added to a polymer including 34 wt% of acrylonitrile and 66 wt% of 1,3-butadiene to adjust the total solids concentration to 12 wt%, was placed in a 1 L autoclave equipped with a stirrer, nitrogen gas was flowed for 10 minutes to remove dissolved oxygen in the solution, and then a hydrogenation reaction catalyst was added. In this case, the hydrogenation reaction catalyst was prepared by dissolving 75 mg of palladium acetate in 180 ml of ion exchange water to which 4 molar equivalents of nitric acid were added with respect to palladium (Pd). The inside of the reactor was replaced with hydrogen gas twice, and then the temperature inside the reactor was raised to 50°C while the hydrogen gas was pressurized to 3 MPa, and a hydrogenation reaction was performed for 6 hours to manufacture a hydrogenated nitrile-based latex (solid content: 21 wt%) including a hydrogenated nitrile-based copolymer.

**Comparative Example 3**

With respect to Example 1, except that the ozonolysis reaction was performed using an air/ozone mixture including 0.05 mol of ozone, a hydrogenated nitrile-based latex (solid content: 21 wt%) was manufactured in the same manner as in Example 1.

**Comparative Example 4**

With respect to Example 1, except that the ozonolysis reaction was performed using an air/ozone mixture including 0.5 mol of ozone, a hydrogenated nitrile-based latex (solid content: 21 wt%) was manufactured in the same manner as in Example 1.

**Comparative Example 5**

With respect to Example 1, except that the ozonolysis reaction was performed using an air/ozone mixture including 0.08 mol of ozone, a hydrogenated nitrile-based latex (solid content: 21 wt%) was manufactured in the same manner as in Example 1.

**Comparative Example 6**

With respect to Example 1, except that the hydrogenation reaction was performed at 37°C and the ozonolysis reaction was performed using an air/ozone mixture including 0.5 mol of ozone, a hydrogenated nitrile-based latex (solid content: 21 wt%) was manufactured in the same manner as in Example 1.

**Experimental Example 1**

Hydrogenated nitrile-based copolymers in the hydrogenated nitrile-based latexes manufactured in Examples and Comparative Examples were measured for residual metal content and viscosity, and the results are shown in Table 1 below.

(1) Residual metal content (ppm)

Each hydrogenated nitrile-based copolymer latex was dried in a vacuum oven at 60°C for 24 hours to prepare a hydrogenated nitrile-based copolymer in each latex. Thereafter, 0.1 g of the hydrogenated nitrile-based copolymer was diluted in 15 ml of hydrofluoric acid, heat-treated by raising the temperature from room temperature (23±5°C) to 250°C for 90 minutes, and then maintained for 60 minutes to prepare a sample for ICP-OES measurement. The residual metal content in each hydrogenated nitrile-based copolymer was measured using an ICP-OES device with an RF power of 1300 W and a plasma gas flow of 15 l/min, and the ICP-OES device has a quantitative analysis detection limit of 60 ppm.

(2) Viscosity

In a 5-liter sealed flask connected to a mechanical paddle stirrer, a reflux condenser, an inlet tube for supplying N-methyl-2-pyrrolidone (NMP), and a vacuum pump, 600 g of each hydrogenated nitrile-based latex (100 g of rubber, 17 wt% solid content) was stirred while 525 L of N-methyl-2-pyrrolidone (NMP) was added dropwise using a pump for 1 hour, and when the addition was completed, the temperature of the sealed flask was raised to 90°C and the pressure was lowered to 10 torr by operating the vacuum pump. The pressure was reduced for 2 hours to sufficiently remove water to prepare a 16 wt% solvent displacement solution, which was then measured using a Brookfield viscometer (#63 spin, 25°C).

(3) Weight average molecular weight (g/mol)

Gel permeation chromatography (Waters PL-GPC220) measurement was performed using a Polymer Lavoratories PLgel MIX-B 300 mm column under the following conditions.

Measurement temperature: 40°C
Flow rate: 0.3 ml/min
Injection volume: 20 $\mu$l
Standard sample: Polystyrene

[Table 1]

| Item | Residual metal content (ppm) | | Viscosity (cps) | Weight average molecular weight (g/mol) |
|---|---|---|---|---|
| | Ru+Pd+Rh | Ca+Mg+Al | | |
| Example 1 | <60 | <100 | 30 | 39,000 |
| Example 2 | <60 | <100 | 70 | 55,000 |
| Example 3 | <60 | <100 | 10 | 15,000 |
| Example 4 | <60 | <100 | 140 | 78,000 |
| Comparative Example 1 | 100 | 220 | 120 | 58,000 |
| Comparative Example 2 | 500 | 130 | 890 | 220,000 |
| Comparative Example 3 | <60 | <100 | 1200 | 190,000 |
| Comparative Example 4 | <60 | <100 | <1 | 7,000 |
| Comparative Example 5 | <60 | <100 | 420 | 84,000 |
| Comparative Example 6 | <60 | <100 | 11 | 9,100 |

As shown in Table 1 above, it was determined that Examples 1 to 3 each had a residual metal content, defined by Equations (1) and (2), of less than 60 and less than 200 and a solvent displacement viscosity of 10 cps or more and 150 cps or less, and at the same time, a weight average molecular weight of 10,000 g/mol or more and 80,000 g/mol or less. Meanwhile, it was determined that Comparative Examples 1 and 2 manufactured by coagulating a nitrile-based copolymer latex manufactured in a latex state through emulsion polymerization using a coagulant (AlSO$_4$, MgSO$_4$, CaCl$_2$) to obtain rubber, and then adding a solvent to prepare a latex solution for a hydrogenation reaction exhibited a significant increase in residual metal by the precious metal catalyst and residual metal by the coagulant compared to Examples, and had increased viscosity by such residual metal.

In addition, Comparative Examples 3 to 6 had the same residual metal content as Examples, but in Comparative Example 3, the ozone reaction did not take place well, and thus the viscosity and weight average molecular weight greatly exceeded the limited range, and in Comparative Example 4, the viscosity was significantly reduced due to excessive splitting of polymer chains.

Meanwhile, the ICP-OES device serves to detect a very small amount of metal ions, and thus some metal components may be detected due to residual components that may be included in the raw material, residual components in the device, or contamination. Accordingly, it is anticipated that small amounts of Ca, Mg, and/or Al were detected in Examples 1 to 3 and Comparative Examples 3 and 4. In addition, with a detection limit of 60 ppm for the ICP-OES device, Ru+Pd+Rh < 60 ppm is interpreted as not being detected.

**Experimental Example 2**

A carbon material pre-dispersion including the hydrogenated nitrile-based latex manufactured in Examples and Comparative Examples was prepared, and measured for viscosity. The results are shown in Table 2 below.

(1) Preparation of carbon material pre-dispersion

In a 5-liter sealed flask connected to a mechanical paddle stirrer, a reflux condenser, an inlet tube for supplying N-methyl-2-pyrrolidone (NMP), and a vacuum pump, 600 g of each hydrogenated nitrile-based latex (100 g of rubber, 17 wt% solid content) was stirred while 525 L of N-methyl-2-pyrrolidone (NMP) was added dropwise using a pump for 1 hour, and when the addition was completed, the temperature of the sealed flask was raised to 90°C and the pressure was lowered to 10 torr by operating the vacuum pump. The pressure was reduced for 2 hours to sufficiently remove water to prepare a solvent displacement solution in which the hydrogenated nitrile-based copolymer was dissolved in the N-methyl-2-pyrrolidone at 16 wt%. The carbon material dispersion was prepared by mixing 3.3 g of carbon nanotubes, 96 g of NMP as a dispersion medium, 0.66 g (with respect to hydrogenated nitrile-based copolymer) of each of the solvent displacement solutions, and 700 g of zirconia beads having a diameter of 1 mm, and then dispersing the mixture through a milling process for 1 hour at 8,000 rpm using Dispemat-CC (VMA-Getzmann) with a disk-type mill.

(2) Viscosity

The carbon material pre-dispersion was measured using a viscometer (Viscometer TV-22, TOKI) at 25°C and 1 rpm.

[Table 2]

| Item | Viscosity (cps) |
|---|---|
| Example 1 | 3300 |
| Example 2 | 4900 |
| Example 3 | 2800 |
| Example 4 | 8200 |
| Comparative Example 1 | 15,000 |
| Comparative Example 2 | - |
| Comparative Example 3 | 28,000 |
| Comparative Example 4 | 16,000 |
| Comparative Example 5 | 18,000 |
| Comparative Example 6 | 20,000 |

As shown in Table 2 above, it was determined that Examples 1 to 4 exhibited significantly reduced viscosity characteristics with a viscosity of 3,300 cps to 8,200 cps, compared to Comparative Example 1 and Comparative Examples 3 to 6. Meanwhile, in the case of Comparative Example 2, the molecular weight of the hydrogenated nitrile-based copolymer was too high, resulting in inadequate dispersion during the preparation of the carbon material pre-dispersion, making viscosity measurement unavailable.

In addition, it is considered that in the case of Comparative Example 4, due to the low viscosity and molecular weight of the hydrogenated nitrile-based copolymer, the aggregation of the carbon material was not inhibited during the preparation of the carbon material pre-dispersion, resulting in inadequate dispersion and a significantly degraded dispersion viscosity compared to Examples.

**Claims**

1.  A hydrogenated nitrile-based latex comprising a hydrogenated nitrile-based copolymer satisfying Equation (1) and Equation (2) below, having a solvent displacement viscosity of 10 cps or more and 150 cps or less, and a weight average molecular weight of 10,000 g/mol or more and less than 80,000 g/mol, wherein the solvent displacement viscosity is measured using a Brookfield viscometer (#63 spin, 25°C) for a solution in which the hydrogenated nitrile-based copolymer is dissolved at 16 wt% in an amide-based dispersion medium,

    $$\text{Equation (1): Ru+Pd+Rh < 60 ppm}$$

    $$\text{Equation (2): Ca+Mg+Al < 200 ppm}$$

    wherein in Equation (1) and Equation (2) above,
    Ru, Pd, Rh, Ca, Mg, and Al are each the content of each metal ion in the hydrogenated nitrile-based copolymer, as measured by ICP-OES (RF power 1300 W, plasma gas flow: 15 l/min).

2.  The hydrogenated nitrile-based latex of claim 1, wherein in Equation (1) above, Ru+Pd+Rh is less than 50 ppm, and in Equation (2) above, Ca+Mg+Al is less than 200 ppm.

3.  The hydrogenated nitrile-based latex of claim 1, wherein in Equation (1) above, Ru+Pd+Rh is less than 50 ppm, and in Equation (2) above, Ca+Mg+Al is less than 100 ppm.

4.  The hydrogenated nitrile-based latex of claim 1, wherein the hydrogenated nitrile-based copolymer has a solvent displacement viscosity of 10 cps or more and 100 cps or less.

5.  The hydrogenated nitrile-based latex of claim 1, wherein the hydrogenated nitrile-based copolymer has a weight average molecular weight of 15,000 g/mol or more and 55,000 g/mol or less.

6.  The hydrogenated nitrile-based latex of claim 1, wherein the hydrogenated nitrile-based copolymer has a hydrogenation degree of 60% or more.

7.  The hydrogenated nitrile-based latex of claim 1, wherein the hydrogenated nitrile-based copolymer comprises an ethylenically unsaturated nitrile-based monomer unit, and a hydrogenated conjugated diene-based monomer unit.

8.  The hydrogenated nitrile-based latex of claim 7, wherein a weight ratio of the ethylenically unsaturated nitrile-based monomer unit and the hydrogenated conjugated diene-based monomer unit is 1:99 to 50:50.

9.  The hydrogenated nitrile-based latex of claim 7, wherein the hydrogenated nitrile-based copolymer further comprises a conjugated diene-based monomer unit.

10. A method for manufacturing a hydrogenated nitrile-based latex comprising a hydrogenated nitrile-based copolymer, the method comprising:

    polymerizing a monomer mixture comprising a conjugated diene-based monomer and an ethylenically unsaturated nitrile-based monomer in the presence of an emulsifier to prepare a nitrile-based copolymer (S1);
    hydrogenating the nitrile-based copolymer to prepare a hydrogenated nitrile-based copolymer (S2); and
    subjecting the hydrogenated nitrile-based copolymer to an ozonolysis reaction (S3),
    wherein step (S3) is performed by bubbling a mixture of air and ozone into the hydrogenated nitrile-based copolymer, and
    the mixture of air and ozone comprises 0.1 mol or more and less than 0.5 mol of ozone.

11. The method of claim 10, wherein the hydrogenating in step (S2) is performed in the presence of an oxidizing agent and a reducing agent.

12. The method of claim 10, wherein the ozonolysis reaction in step (S3) is performed at a temperature ranging from 0°C to 75°C.

13. A carbon material dispersion comprising a carbon material, a dispersion medium, and a hydrogenated nitrile-based copolymer,

wherein the hydrogenated nitrile-based copolymer satisfies Equation (1) and Equation (2) below, has a solvent displacement viscosity of 10 cps or more and 150 cps or less, and a weight average molecular weight of 10,000 g/mol or more and less than 80,000 g/mol, and the solvent displacement viscosity is measured using a Brookfield viscometer (#63 spin, 25°C) for a solution in which the hydrogenated nitrile-based copolymer is dissolved at 16 wt% in an amide-based dispersion medium,

$$\text{Equation (1): Ru+Pd+Rh < 60 ppm}$$

$$\text{Equation (2): Ca+Mg+Al < 200 ppm}$$

wherein in Equation (1) and Equation (2) above,
Ru, Pd, Rh, Ca, Mg, and Al are each the content of each metal ion in the hydrogenated nitrile-based copolymer, as measured by ICP-OES (RF power 1300 W, plasma gas flow: 15 l/min).

14. The carbon material dispersion of claim 13, having a viscosity of 1,000 cps or more and less than 15,000 cps.

15. The carbon material dispersion of claim 13, wherein the carbon material is at least one selected from the group consisting of carbon black, Ketjen black, fullerene, graphene, carbon nanotube, carbon black, and graphite.

## INTERNATIONAL SEARCH REPORT

| | International application No. |
|---|---|
| | **PCT/KR2025/003054** |

| A. | CLASSIFICATION OF SUBJECT MATTER |
|---|---|

**C08C 19/02**(2006.01)i; **C08L 15/00**(2006.01)i; **C08F 236/12**(2006.01)i; **C08F 2/24**(2006.01)i; **C01B 32/174**(2017.01)i; **C09C 1/56**(2006.01)i; **C08K 3/04**(2006.01)i; **H01M 4/62**(2006.01)i; **H01M 4/139**(2010.01)i; **H01M 10/0525**(2010.01)i

According to International Patent Classification (IPC) or to both national classification and IPC

| B. | FIELDS SEARCHED |
|---|---|

Minimum documentation searched (classification system followed by classification symbols)

C08C 19/02(2006.01); B29C 41/14(2006.01); B29C 71/00(2006.01); B82B 1/00(2006.01); C01B 31/02(2006.01); C08L 33/08(2006.01); C08L 39/00(2006.01); C08L 9/00(2006.01); C08L 9/04(2006.01); H01M 4/13(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 니트릴(nitrile), 라텍스(latex), 오존(ozone)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-0344137 B1 (EQUISTAR CHEMICALS, LP) 09 November 2002 (2002-11-09)<br>See claim 1; paragraphs [0010]-[0055]; and example 1. | 1-12 |
| Y | | 13-15 |
| Y | KR 10-2017-0030438 A (LG CHEM, LTD.) 17 March 2017 (2017-03-17)<br>See claim 1. | 13-15 |
| A | KR 10-2011-0088795 A (LG CHEM, LTD.) 04 August 2011 (2011-08-04)<br>See claims 1-11. | 1-15 |
| A | US 2021-0009791 A1 (ZEON CORPORATION) 14 January 2021 (2021-01-14)<br>See claims 1-6. | 1-15 |
| A | KR 10-2015-0016852 A (CHEIL INDUSTRIES INC.) 13 February 2015 (2015-02-13)<br>See claims 1-13. | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 June 2025** | **05 June 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/003054**

| Patent document cited in search report | | | Publication date (day/month/year) | Patent family member(s) | | | Publication date (day/month/year) |
|---|---|---|---|---|---|---|---|
| KR | 10-0344137 | B1 | 09 November 2002 | EP | 0751975 | A1 | 08 January 1997 |
| | | | | EP | 0751975 | A4 | 17 December 1997 |
| | | | | EP | 0751975 | B1 | 28 April 1999 |
| | | | | JP | 09-510498 | A | 21 October 1997 |
| | | | | JP | 3925939 | B2 | 06 June 2007 |
| | | | | KR | 10-1997-0701761 | A | 12 April 1997 |
| | | | | US | 5424356 | A | 13 June 1995 |
| | | | | US | 5442007 | A | 15 August 1995 |
| | | | | US | 5442009 | A | 15 August 1995 |
| | | | | WO | 95-25768 | A1 | 28 September 1995 |
| KR | 10-2017-0030438 | A | 17 March 2017 | CN | 108064255 | A | 22 May 2018 |
| | | | | CN | 108064255 | B | 27 March 2020 |
| | | | | EP | 3348582 | A1 | 18 July 2018 |
| | | | | EP | 3348582 | A4 | 05 June 2019 |
| | | | | EP | 3348582 | B1 | 07 April 2021 |
| | | | | JP | 2018-522803 | A | 16 August 2018 |
| | | | | JP | 2020-019705 | A | 06 February 2020 |
| | | | | JP | 6633654 | B2 | 22 January 2020 |
| | | | | KR | 10-2022399 | B1 | 18 September 2019 |
| | | | | US | 10141574 | B2 | 27 November 2018 |
| | | | | US | 2018-0226650 | A1 | 09 August 2018 |
| | | | | WO | 2017-043818 | A1 | 16 March 2017 |
| KR | 10-2011-0088795 | A | 04 August 2011 | KR | 10-1288780 | B1 | 22 July 2013 |
| US | 2021-0009791 | A1 | 14 January 2021 | CN | 111801379 | A | 20 October 2020 |
| | | | | CN | 111801379 | B | 26 July 2022 |
| | | | | EP | 3766930 | A1 | 20 January 2021 |
| | | | | EP | 3766930 | A4 | 24 November 2021 |
| | | | | EP | 3766930 | B1 | 11 May 2022 |
| | | | | JP | 2021-176921 | A1 | 25 February 2021 |
| | | | | JP | 7207397 | B2 | 18 January 2023 |
| | | | | KR | 10-2020-0131234 | A | 23 November 2020 |
| | | | | KR | 10-2620131 | B1 | 29 December 2023 |
| | | | | US | 11225566 | B2 | 18 January 2022 |
| | | | | WO | 2019-176921 | A1 | 19 September 2019 |
| KR | 10-2015-0016852 | A | 13 February 2015 | WO | 2015-020280 | A1 | 12 February 2015 |

Form PCT/ISA/210 (patent family annex) (July 2022)

**REFERENCES CITED IN THE DESCRIPTION**

**Patent documents cited in the description**

- KR 1020240032865
- KR 1020240034630

- KR 1020210035088 A